# EUROPEAN PATENT APPLICATION

(11) **EP 1 653 572 A1**
(43) Date of publication of application: **03.05.2006**
(21) Application number: 04388073.1
(22) Date of filing: 27.10.2004
(51) Int. Cl.: H01R 25/00, H02J 13/00

(54) **A power strip device**

(71) Applicant: Centritech Limited, Central, Hong Kong (CN)
(72) Inventor: Waedeled, Peter, Juan Town Shunde City (CN)
(74) Representative: Nielsen, Henrik Sten

(57) **Abstract**

A power strip device, comprises a housing of an electrically insulating material and of an elongated configuration and an electrical cord including a live wire and a neutral wire. The electrical cord extends from the one end surface of said housing through a first pull relief bushing. A low voltage cord extends from the one end surface, from the top surface or alternatively from one of said side surfaces through a second pull relief bushing and having at its remote end an IR detector for the detection of an IR signal, generated by a separate remote control unit and for the generation of a control signal. A set of power outlets constitute switched power outlets. A solenoid relay includes a low voltage solenoid having a pair of low voltage input terminals and an AC switch having a pair of AC output terminals. The AC output terminals are galvanically separated from the low voltage input terminals. An electronic detector circuiting included in the housing and connected to the electrical cord for receiving electrical power, and has a pair of signal input terminals connected to the low voltage cord for receiving the control signal from the exposed light detector and a pair of signal output terminals connected to the low voltage input terminals of the solenoid relay.

## Description

The present invention relates to a power strip device, i.e. an electrical device and apparatus to be use for the splitting of a single AC power outlet into a plurality of AC power outlets. More particularly, the present invention relates to a switched electrical power strip device to be used in combination with home electronic devices which are connected to the power strip device for receiving AC mains power therefrom and has an electronic detector circuit for switching on and off a plurality of AC power outlets to which the electronic device such as a TV set, a VCR, a DVD player, a DVD player and recorder, a satellite receiver, a surround sound amplifier or receiver, a CD player, a tape recorder, a cassette recorder, a stereo amplifier, a record player or the like.

In the present context, a home electronic device is to be construed as a generic term including any electrical apparatus for office, home or domestic use or personal use including the above mentioned apparatuses or any other similar apparatus.

Within the computer filed there have already been made attempts to provide technical solutions for saving energy by providing switched strip power strip devices, which power strip devices are connectable to an AC power outlet and to e.g. an USB terminal of the computer. Within the power strip device, a relay such as a solenoid or solid state relay may be housed for switching the AC power outlets of the power strip device on and off controlled by the computer through its USB connection. The relay is powered directly from the USB output of the computer and the power strip includes a number, e.g. four or six AC power outlets, which are all switched on and off simultaneously controlled by the USB outlet.

The commercially available products of this type have generally been manufactured as highly expensive equipment or alternatively as extremely low cost products, which for the sake of reducing the price, have been manufactured without taking due consideration to the safety requirements when combining a low voltage control side and a high voltage AC mains supply side. The concern relating to the safety aspect is of course far more pronounced in e.g. Europe as compared to the Far East and North America, since in Europe, the AC mains supply voltage is today 230 V, whereas in the Far East and in North America, the AC mains supply voltage is merely 110-120V.

Examples of electrical power strip devices of this kind are described in: US 4,675,537, US 5,097,249, US 5,164,609, US 5,424,903, US 5,550,649, US 5,579,201, US 5,841,424, US 6,211,581, US 6,509,655, US 6,526,516, US 6,586,849 and US 6,586,849. Reference is made to the above US patents and the above US patents are further hereby incorporated in the present specification by reference.

Within the present technical field, i.e. the field of home electronic devices, attempts have also been made to provide switched power strip devices for the turning on or turning off of a plurality of electronic devices. Examples of electrical power strip devices of the kind are described in US 6,642,852 and US Des. 411,169. Reference is made to the above US patents and the above US patents are further hereby incorporated in the present specification by reference.

The applicant company and in particular, the inventor has realised that the technical solutions commercially available within the technical field of switched power strip devices call for improvement and refinement, in particular in terms of safety considerations and further in terms of safe and reliable operation, and still further in terms of user comfort.

An object of the present invention is to provide a power strip device of the above described kind having a plurality of switched AC power outlets, which electric power strip device fulfils the requirements as to separation between the low voltage side and the high voltage AC mains supply side and further, provides a safe and swift switching operation as distinct from the prior art simple relay switches which in some instances may turn out to be unreliable and malfunctioning.

It is a further object of the present invention to provide a power strip device which may be used in a concealed position having the AC power outlets concealed behind e.g. a piece of furniture and allowing the power strip device to be safely switched on and off by means of a remote control unit to be used in its conventional mode for turning on and off e.g. a TV set and further e.g. a DVD player or any other of the apparatuses mentioned above.

The above object together with numerous other advantages and features, which will be evident from the below detailed description of the presently preferred embodiment of the power strip device according to the present invention, is according to the teachings of the present invention obtained by a power strip device, comprising:
a housing of an electrically insulating material and of an elongated configuration defining opposite end surfaces, a top surface, a bottom surface and opposite side surfaces,
an electrical cord including a live wire and a neutral wire, the electrical cord extending from the one end surface of the housing through a first pull relief bushing and having at its remote end an AC plug to be connected to an AC mains outlet for the supply of AC mains power to the power strip device,
a low voltage cord extending from the one end surface, from the top surface or alternatively from one of the side surfaces through a second pull relief bushing and having at its remote end an exposed light detector, preferably an IR detector included in a light detector housing for the detection of an optical signal, preferably an IR signal, generated by a separate remote control unit and for the generation of a control signal by the detection of the optical signal,
a set of power outlets constituting switched power outlets and provided at the top surface and each having a set of terminals including a live terminal and a neutral terminal, the neutral terminals being connected to the neutral wire of the electrical cord,
a solenoid relay including a low voltage solenoid having a pair of low voltage input terminals and an AC switch having a pair of AC output terminals, the AC output terminals being galvanically separated from the low voltage input terminals, the live terminals of the set of power outlets being connected to the live wire of the electric cord through the pair of AC output terminals, and
an electronic detector circuit included in the housing and connected to the live wire and the neutral wire of the electrical cord for receiving electrical power, the electronic detector circuit having a pair of signal input terminals connected to the low voltage cord for receiving the control signal from the exposed light detector and a pair of signal output terminals connected to the low voltage input terminals of the solenoid relay, the electronic detector circuit switching the solenoid relay on from an off state or, in the alternative switching the solenoid relay off from an on state through the output of a turn-on signal or, in the alternative, a turn-off signal, respectively, when receiving the control signal.

According to a particular feature of the electrical power strip device according to the present invention, the exposed light detector, preferably the IR detector, is mounted at the remote end of a low voltage cord for allowing the power strip device to be positioned in a concealed position, e.g. behind a TV set or a TV furniture or behind a stereo rack or the like where the exposed light detector may be positioned in a convenient location, e.g. close to the IR detector of the TV set in question for readily operating the power strip device by directing the remote control towards the TV set and turning on or turning off the TV set together with any other equipment such as a DVD player, a VCR, a satellite receiver, a surround sound amplifier, etc. by directing the remote control unit towards the TV set in the orientation as if the TV set alone was to be turned on or turned off.

It is to be understood that the user has normally accommodated a practice of directing the remote control unit towards the TV set for turning on or turning off the TV set and therefore, provided the power strip device was to be operated by directing the remote control towards another location, the power strip device would most likely not be properly operated and could not generally detect the IR or optical signal generated by the remote control unit and intended for the switching on or switching off of the TV set together with the other apparatuses connected to the power strip device according to the present invention.

It is a further distinct feature of the power strip device according to the present invention that the switching from the low voltage control side to the high power AC mains supply side is established through a galvanic separation between the low voltage side and the high voltage side.

In this context, the terms low voltage and high voltage are to be construed as generic terms representing the non-hazardous low level control side such as a voltage level of below 40V-50V, e.g. the conventional 5VDC logical control level of computer equipment and the AC mains voltage level of more than 100V such as the AC mains supply level conventionally used in Europe being 230V/50Hz and in North America 110V/60Hz and in Japan 110V/50Hz.

Most countries in Europe, in the Far East and also in North and South America have a standard prescribing the use of a grounded AC power outlet plug. However, in Denmark, most domestic appliances are not provided with a ground terminal and most domestic AC power outlets have no ground terminal. In accordance with the conventional standards such as the international and national standards, among which several are to be mentioned below, the electrical cord consequently includes a ground wire and, according to a second and presently preferred embodiment of the power strip device according to the present invention, the electrical cord also includes a ground wire and similarly, the power outlets have ground terminals which are connected to the ground wire of the electrical cord. By the provision of ground terminals in the AC outlets, a safe grounding of all AC power outlets is established since the ground terminals of the AC power outlets are permanently connected to the ground wire of the electrical cord.

For ensuring that the exposed light detector, preferably the IR detector, may be positioned in the proper position for allowing the user to direct the remote control unit towards the detector in a convenient manner resembling the manner in which the TV set or any other home electronic is normally switched on or off, the low voltage cord preferably has a length of no less than 1 m, preferably 1-2 m, such as approximately 1-1,25 m, 1,25-1,5 m, 1,5-1,75 m, 1,75-2 m, or preferably approximately 1,25-1,75 m, such as approximately 1,5 m.

The electronic circuitry, in particular the electronic detection circuit of the power strip device according to the present invention may be implemented in accordance with any well known electronic principles per se, including discrete transistors, TTL circuitry, CMOS circuitry. In accordance with a presently preferred embodiment of the power strip device according to the present invention, the electronic detection circuit includes a programmable microprocessor and the light detector is constituted by a phototransistor.

The power strip device may be programmed for the use in combination with a single control unit exclusively as the microprocessor of the power strip device may be programmed for the detection of a control signal originating from an optical signal or an optical code generating by one specific remote control unit. Alternatively and preferably, the electronic detector circuit includes an encoder switch for switching the microprocessor from an operational mode into an encoder mode in which encoder mode the microprocessor stores the control signal received from the exposed light detector and thereby is programmed for the use in combination with the remote control unit held by the user.

For ensuring a proper and safe operation of the power strip device meaning that the power strip device is not unintentionally turned on or off by the operation of a remote control unit intended to be used in combination with a different apparatus which is not powered from the power strip device in question, the microprocessor preferably compares signals received from the exposed light detector with the control signal stored in the microprocessor for determining whether or not to respond to the receipt of signal for causing the switching of the solenoid relay on or off.

For allowing the microprocessor of the electronic detector circuit of the power strip device according to the present invention to store the control signal, the electronic detector circuit further and preferably concludes a storage element such as an E² PROM, i.e. an Electronic Erasable Programmable Read Only Memory or any other storage elements well known in the art per se.

In order to obtain the overall goal of reducing the power consumption by the use of the power strip device rather than having each and every apparatus powered by a power splitter turned in to standby mode, the electronic detector circuit preferably includes a low power supply unit for the supply of electrical power to the electronic circuitry of the electronic detector circuit.

The electrically insulated housing of the power strip device according to the present invention is preferably made from a plastics material such as ABS, PP, PC, PV, PE, PVC, Nylon, a combination thereof or any other insulating plastics material and the housing is preferably made through moulding the housing in an injection moulding process.

The injection moulded housing may according to a further advantageous embodiment of the power strip device according to the present invention be composed of two parts, a bottom part to be snap-fitted or fixed by means of rivets or bolts and nuts onto a top part comprising the said one end surface, the top surface and the side surfaces and including a support for the support of a printed circuit board on which said current amplification circuit is included.

By the provision of the two part housing, the process of manufacturing the power strip device according to the present invention, in particular in terms of providing power strip devices for different national or international standards is simplified as the top housing part is simply injection moulded in accordance with the national or international standard in question and has the electrical cord and the low voltage cord mounted together with the electric printed circuit board constituting a prefabricated unit which is then sealed off by means of the bottom part. Consequently, the power strip device according to the present invention may be implemented in accordance with any international or national standards such as DE/SE/NO, UK, DK, FR, CH, IT, PT, PL, BE, NL, RU, CFA, FI,TW or UL (USA).

As indicated above, the power strip device according to the present invention is preferably implemented so as to allow all relevant equipment or all apparatuses to be used in connection with the power strip device to be switched on and off simultaneously. Consequently, the power outlet was preferably provided in a number ranging from 2-12, such as 3-8, preferably 3-6.

As stated above, the power strip device according to the present invention is implemented in accordance with any of the above national or international standards and for use in connection with 110-230V AC mains supply appliances such as 110V/60 Hz or 230V/50Hz.

The present invention is now to be further described with reference to the drawings, in which:
Fig. 1 is an overall, perspective and schematic view of a first and presently preferred embodiment of a power strip device according to the present invention implemented in accordance with a Danish standard called LMJ (Lys Med Jord),
Fig. 2 is a diagrammatic view illustrating the electronic circuitry of the power strip device shown in Fig. 1, and
Fig. 3 is a detailed diagrammatic view of the electronic circuitry of the power strip device shown in Fig. 1.

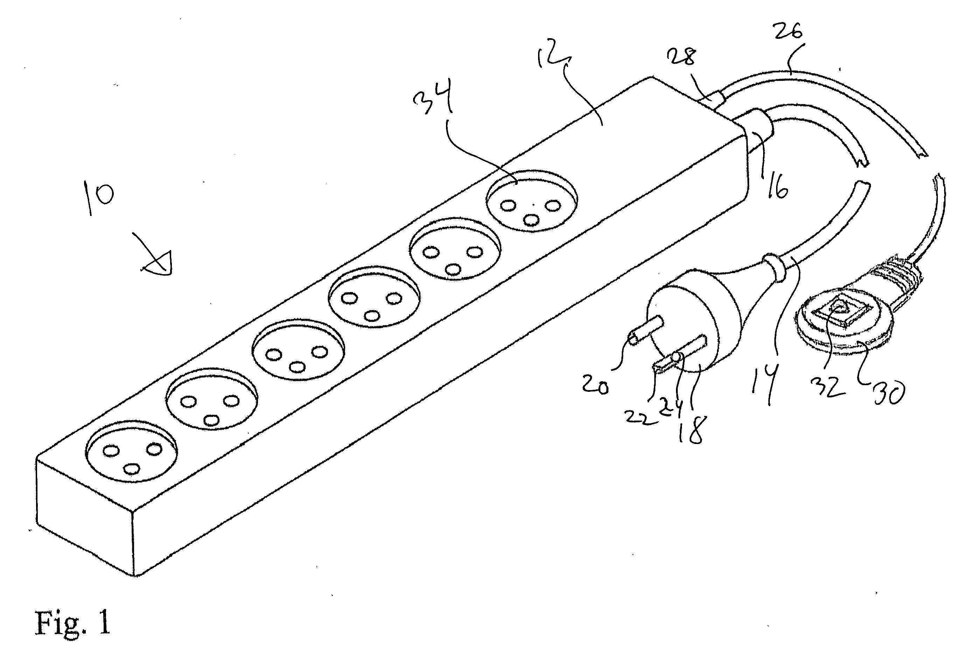

In Fig. 1, a power strip device is shown designated the reference numeral 10 in its entirety. The device is implemented in accordance with the Danish standard of equipment to be used for mains supply and mains distribution as the AC outlets of the device are implemented in accordance with the Danish standard called LMJ (Lys Med Jord). It is to be understood that the power strip device shown in Fig. 1 is only an example and the technique of providing a power strip device according to the teachings of the present invention may be implemented in accordance with any standard such as the Danish standard excluding ground terminals, the Danish EDB (Elektronisk Data Behandling) standard, the German/Swedish and Norwegian standard, also known as "Schuko", the standards of other European countries including the UK, France, Switzerland, Italy, Czechoslovakia, Poland, Portugal and also overseas standards such as the Japanese, the US or the Australian standards and the international CEE standard.

In more details, the device 10 shown in Fig. 1 comprises an elongated housing 12 defining a front end from which an AC cord 14 extends through a first pull release bushing 16 and terminating in an AC plug 18 from which three pins extend, a first pin 20 constituting a neutral pin, a second pin 22 constituting a ground pin and a third pin 24 constituting a live pin. From the same front end of the housing 12, a further cord 26 extends through a second pull release bushing 28, which cord is a low voltage control cord terminating in a housing 30 including an optical IR sensor 32. Whereas the cord 14 serves for the supply of 230V AC power to the power strip device 10, the cord 26 serves to supply a control signal by the detection of an optical or IR signal.

In the housing 12, a total of six AC outlets are provided, a first one of which is designated the reference numeral 34. The AC power outlets 34 are switched on or off controlled by the control signal supplied to the power strip device through the cord 26 as will be described in greater details below.

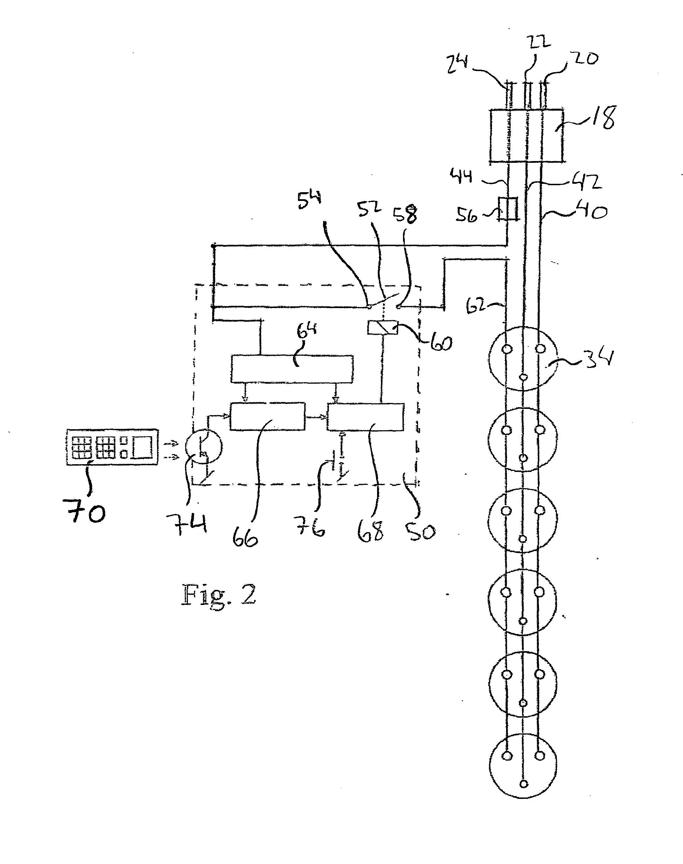

In Fig. 2, the electronic circuitry of the power strip device 10 is shown. In the upper right hand part of Fig. 2, the plug 18 is shown having its three pins 20, 22 and 24 extending upwardly. The pins 20, 22 and 24 are through the plug 18 connected to three wires 40, 42 and 44, respectively, constituting a neutral wire, a ground wire and a live wire, respectively. As is evident from Fig. 2, the wires 40 and 42 are connected directly to the switched AC outlets 34.

The live wire 44 is, as is evident from Fig. 2, connected to a switching on/switching off circuit 50. The circuit 50 is controlled by the detection of an optical signal or an IR signal generated by a remote central unit 70. The circuitry 50 includes centrally a galvanically separating relay including a one pole switch 52, which is activated by means of a solenoid coil 60. A first terminal 54 of the one pole switch 52 is connected to the live wire 44 and, consequently, connected to the live terminal 24 of the AC plug 18, optionally through a fuse 56, provided the relevant standard in question prescribes the use of a fuse. A second terminal 58 of the one pole switch 52 is connected to a switched on/switched off live wire 62, which is connected to the switched AC power outlets 34.

The low voltage side of the electronic circuitry 50, i.e. the control side of the solenoid relay includes three main blocks 64, 66 and 68 and a phototransistor 74 and a coding switch 76. The block 64 constitutes a low power consuming power supply unit for the supply of electrical power to the two blocks 66 and 68 which constitute a receiver and demodulator block and a microprocessor controller block, respectively, The receiver and demodulator block 66 is connected to the phototransistor 74 for receiving an electrical signal as the phototransistor detects an optical signal or an IR signal generated by means of the remote controller unit 70. Along with the control signal generated by the receiver and demodulator block 66, the microprocessor block 68 receives a coding signal provided the coding switch 76 is activated in which case the microprocessor of the microprocessor controller block 68 is switched into an encoder mode in which the signal supplied from the receiver and demodulator block 66 and originating from the optical IR signal generated by the remote control unit 70 is input to the microprocessor block 68 for encoding the signal as the control signal, the detection of which is to cause the switching of the relay 60 for switching on or switching off the AC power outlets 34.

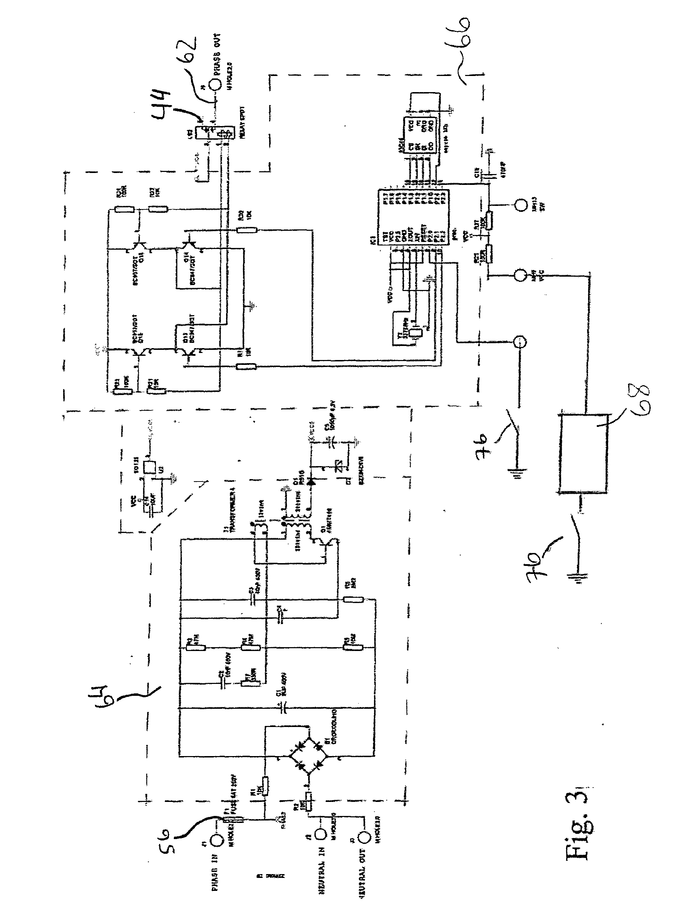

In Fig. 3, the components of the electronic circuitry of the block 50 is shown in greater details, and in the enclosed list, the components of the electronic circuitry is presented. No further detailed description of the electronic circuitry is presented as the diagram is believed to be self-explanatory.

### List:

| Reference | Value |
|---|---|
| B1 | Bridge |
| C1 | 2UF 400V |
| C2 | 10nF 400V |
| C3 | 40nF 400V |
| C5 | 1000µF 6,3V |
| C13 | 10UF |
| C14 | 10UF |
| C15 | 470NF |
| D1 | RS1G |
| D2 | BZX84C6V8 |
| F1 | FUSE 5AT 250V |
| IC3 | Proc. |
| IC4 | 93C46 |
| BLOCK 68 | HERO ELECTRONICS LIMITED IR RECEIVER |
| Q1 | FMM458 |
| Q13 | BC847/SOT |
| Q14 | BC847/SOT |
| Q15 | BC857/SOT |
| Q16 | BC857/SOT |
| R1 | 10K |
| R2 | 10K |
| R3 | 47M |
| R4 | 47M |
| R5 | 10M |
| R6 | 2M2 |
| R7 | 330R |
| R19 | 10K |
| R20 | 10K |
| R21 | 10K |
| R22 | 10K |
| R26 | 10K |
| R23 | 100K |
| R24 | 100K |
| R27 | 100K |
| R25 | 100K |

The switch 76 shown in Figs. 2 and 3 may be configurated as a one touch pad which is positioned in the housing 12 in a recess or below a thin foil housing part. Alternatively, the switch 76 may be included on the printed circuit board included within the housing of the power strip device 10 and may consequently only be activated after opening the housing 12. The power strip device 10 in the embodiment described, in which the switch 76 is not assessable from the exterior relative to the housing 12 is dedicated and encoded for a specific type of remote control units or a specific brand of electronic equipment.

Although the present invention has been described above with reference to a specific and presently preferred embodiment of the power strip device according to the present invention, numerous modifications, as already mentioned above, will be obvious to a person having ordinary skill in the art, as the power strip device may be modified for complying with a specific national or international AC mains supply standard and further the number of switched AC power outlets may be varied from e.g. three to a number exceeding the number shown in Fig. 1. All such modifications are to be considered part of the present invention as defined in the appending claims.

## Claims

1. A power strip device, comprising:
a housing of an electrically insulating material and of an elongated configuration defining opposite end surfaces, a top surface, a bottom surface and opposite side surfaces,
an electrical cord including a live wire and a neutral wire, said electrical cord extending from the one end surface of said housing through a first pull relief bushing and having at its remote end an AC plug to be connected to an AC mains outlet for the supply of AC mains power to said power strip device,
a low voltage cord extending from said one end surface, from said top surface or alternatively from one of said side surfaces through a second pull relief bushing and having at its remote end an exposed light detector, preferably an IR detector included in a light detector housing for the detection of an optical signal, preferably an IR signal, generated by a separate remote control unit and for the generation of a control signal by the detection of said optical signal,
a set of power outlets constituting switched power outlets and provided at said top surface and each having a set of terminals including a live terminal and a neutral terminal, said neutral terminals being connected to said neutral wire of said electrical cord,
a solenoid relay including a low voltage solenoid having a pair of low voltage input terminals and an AC switch having a pair of AC output terminals, said AC output terminals being galvanically separated from said low voltage input terminals, said live terminals of said set of power outlets being connected to said live wire of said electric cord through said pair of AC output terminals, and
an electronic detector circuit included in said housing and connected to said live wire and said neutral wire of said electrical cord for receiving electrical power, said electronic detector circuit having a pair of signal input terminals connected to said low voltage cord for receiving said control signal from said exposed light detector and a pair of signal output terminals connected to said low voltage input terminals of said solenoid relay, said electronic detector circuit switching said solenoid relay on from an off state or, in the alternative switching said solenoid relay off from an on state through the output of a turn-on signal or, in the alternative, a turn-off signal, respectively, when receiving said control signal.

2. The power strip device according to claim 1, said electrical cord further including a ground wire, and each of said power outlets further having a ground terminal connected to said ground wire.

3. The power strip device according to any of the claims 1 or 2, said low voltage cord having a length of no less than 1 m, preferably 1-2 m, such as approximately 1-1,25 m, 1,25-1,5 m, 1,5-1,75 m, 1,75-2 m, or preferably approximately 1,25-1,75 m, such as approximately 1,5 m.

4. The power strip device according to any of the claims 1-3, said electronic detection circuit including a programmable microprocessor and said exposed light detector being constituted by a phototransistor.

5. The power strip device according to claim 4, said electronic detector circuit including an encoder switch for switching said microprocessor from an operational mode into an encoder mode, in which encoder mode said microprocessor stores said control signal received from said exposed light detector.

6. The power strip device according to claim 5, said electronic detector circuit said microprocessor comparing signals received from said exposed light detector with said control signal stored in said microprocessor for determining whether or not to respond to the receipt of a signal for causing the switching of said solenoid relay on or off.

7. The power strip device according to any of the claims 4-6, said electronic detector circuit further including a storage element, such as an E² PROM.

8. The power strip device according to any of the claims 1-7, said electronic detector circuit including a low power consuming power supply unit for the supply of electrical power to the electronic circuitry of the electronic detector circuit.

9. The power strip according to any of the claims 1-8, said housing being made from plastics material such as ABS, PP, PC, PE, PVC, Nylon, combinations thereof or any other insulating plastics material and being made through moulding said housing in an injection moulding process.

10. The power strip device according to 1-9, said housing being composed of two parts, a bottom part to be snap-fitted or fixed by means of rivets or bolts and nuts onto a top part comprising the said one end surface, the top surface and the side surfaces and including a support for the support of a printed circuit board on which said electronic detector circuit is included.

11. The power strip device according to any of the claims 1-10, said AC plug, said set of power outlets being made according to any of the following national or international standards of DE/SE/NO, UK, DK, FR, CH, IT, PT, PL, BE, NL, RU, CFA, FI, TW or UL (USA).

12. The power strip device according to any of the claims 1-11, said set of power outlets being provided in a number ranging from 2-12, such as 3-8, preferably 3-6.

13. The power strip device according to any of the claims 1-12, said AC being 110-230V, such as 110V/60Hz or 230/50Hz.
